# EUROPÄISCHE PATENTANMELDUNG

(11) **EP 1 460 286 A1**
(43) Veröffentlichungstag der Anmeldung: **22.09.2004**
(21) Anmeldenummer: 03029996.0
(22) Anmeldetag: 31.12.2003
(51) Int. Cl.: F16C 3/03, F16D 3/84, F16J 15/32

(54) **Abdichtanordnung für den Längenausgleich einer Kreuzgelenkwelle**

(30) Priorität: 18.03.2003 DE 10312050
(71) Anmelder: Spicer Gelenkwellenbau GmbH & Co. KG, 45143 Essen (DE)
(72) Erfinder: Schultze, Hans-Jürgen, 46240 Bottrop (DE); Meineke, Manfred, 58454 Witten (DE); Müller, Erhard, 45529 Hattingen (DE)
(74) Vertreter: Harwardt, Günther, Dipl.-Ing.

(57) **Zusammenfassung**

Die Erfindung betrifft eine Abdichtanordnung für den Längenausgleich einer Kreuzgelenkwelle, welche ein rohrförmiges erstes Wellenelement 5 mit einer Innenverzahnung und ein zweites Wellenelement mit einer zur Innenverzahnung passenden und darin entlang einer Längsachse 4 verstellbaren Außenverzahnung aufweist, wobei eines der beiden Wellenelemente 5 eine kreiszylindrische Außenfläche aufweist, die eine Anlagefläche 10 für einen Dichtungsring 316 bildet, umfassend eine rohrförmige Dichthülse 311, die ein erstes Ende und dem ersten Ende entfernt ein zweites Ende aufweist, in die das die Anlagefläche 10 aufweisende Wellenelement 5 eintaucht, deren erstes Ende mit dem Wellenelement, das keine Anlagefläche 10 für den Dichtungsring 316 aufweist, oder mit einem damit verbundenen Bauteil fest verbunden ist, die an ihrem zweiten Ende eine ringförmige Aufnahmenut 320 zur Festlegung des Dichtungsrings 316 aufweist, welche dadurch gebildet ist, dass dem ersten Ende zugewandt ein von der Längsachse 4 weg gerichteter erster Wandabschnitt 317, daran anschließend ein vom ersten Ende weg verlaufender zweiter Wandabschnitt 318 und daran anschließend ein auf die Längsachse 4 zu verlaufender dritter Wandabschnitt 319 vorgesehen sind, wobei der Dichtungsring 316 einen Dichtabschnitt 322 mit mindestens einer Dichtlippe 323 zur Anlage an der Anlagefläche 10 trägt und einen Halteabschnitt 324 aufweist, welcher zumindest teilweise in der Aufnahmenut 320 aufgenommen und flexibel gestaltet ist, so dass er in die Aufnahmenut 320 unter Nutzung seiner Verformbarkeit einführbar ist.

## Beschreibung

Die Erfindung betrifft eine Abdichtanordnung für den Längenausgleich einer Kreuzgelenkwelle, welche ein rohrförmiges erstes Wellenelement mit einer Innenverzahnung und ein zweites Wellenelement mit einer zur Innenverzahnung passenden und darin entlang einer Längsachse verstellbaren Außenverzahnung aufweist, wobei eines der beiden Wellenelemente eine kreiszylindrische Außenfläche aufweist, die eine Anlagefläche für einen Dichtungsring bildet.

Eine Abdichtanordnung für einen Längenausgleich für eine Kreuzgelenkwelle ist in der US 3,123,990 beschrieben. Dabei ist dem die Außenverzahnung aufweisenden Teil des Wellenelements eine Dichthülse aus Kunststoff zugeordnet, die mit ihrem ersten Ende mit diesem Wellenelement fest verbunden ist. Ihr zweites Ende ragt bis über die Außenfläche des die Innenverzahnung aufweisenden Wellenelementes. An diesem zweiten Ende sind nach innen vorragend zwei Ringstege angeformt, die entlang der Längsachse voneinander beabstandet sind, so dass sie eine Aufnahmenut zwischen sich bilden, in welcher ein sogenannter Quadring aufgenommen ist, der an der Anlagefläche anliegt. Zusätzlich ist das die Innenverzahnung aufweisende Wellenelement an seinem in dem Innenraum der Hülse liegenden Ende mit einer weiteren Dichtungsanordnung versehen, die einen Haltering umfasst, der an dem die Innenverzahnung aufweisenden Wellenelement festgelegt ist und einen gegenüber diesem an einem im Durchmesser abgesetzten Abschnitt des Wellenelements, das die Außenverzahnung aufweist, mittels eines ersten Dichtrings und gegenüber der Innenfläche der Dichthülse mit einem im Haltering aufgenommenen zweiten Dichtring abgedichtet ist.

Diese Abdichtung ist hinsichtlich Herstellung und Montage insgesamt sehr aufwändig. Im übrigen ist ein Quadring nicht dazu geeignet, alleine eine wirksame Abdichtung zu erzielen, da er eigentlich nur zur Abdichtung zwischen relativ zueinander votierenden Bauteilen gedacht ist, nicht jedoch für Teleskopanordnungen.

Aufgabe der Erfindung ist es, eine Abdichtanordnung für einen Längenausgleich einer Kreuzgelenkwelle zu schaffen, bei der ein Dichtungsring genügt, um die erforderliche Abdichtwirkung zu erzielen, wobei der Dichtungsring einfach montierbar sein soll.

Gelöst wird diese Aufgabe erfindungsgemäß dadurch, dass die Aufnahmenut dadurch gebildet ist, dass dem ersten Ende zugewandt ein von der Längsachse weg gerichteter erster Wandabschnitt, daran anschließend ein vom ersten Ende weg verlaufender zweiter Wandabschnitt und daran anschließend ein auf die Längsachse zu verlaufender dritter Wandabschnitt vorgesehen sind, und dass der Dichtungsring einen Dichtabschnitt mit mindestens einer Dichtlippe zur Anlage an der Anlagefläche trägt und einen Halteabschnitt aufweist, welcher zumindest teilweise in der Aufnahmenut aufgenommen und flexibel gestaltet ist, so dass er in die Aufnahmenut unter Nutzung seiner Verformbarkeit einführbar ist.

Von Vorteil bei dieser Ausbildung ist, dass aufgrund der Gestaltung der Dichtungshülse an ihrem zweiten Ende in Verbindung mit dem Dichtungsring eine günstige Abdichtung erzielt wird, die nur einen einzigen Dichtungsring benötigt, der dazu noch einfach gestaltet sein kann. Der Dichtungsring wird infolge der Ausbildung der Dichtungshülse eingespannt gehalten, so dass er selbst keiner Verstärkungseinlage oder dergleichen Mittel bedarf. Die Dichtungshülse kann dabei aus einem eine hohe Formstabilität aufweisenden Kunststoff, vorzugsweise jedoch aus einem Stahlblech bestehen.

In Ausgestaltung der Erfindung ist vorgesehen, dass der dritte Wandabschnitt gewölbt verläuft, wobei die Wölbung vom ersten Ende der Dichthülse weg gerichtet ist. Hierdurch wird eine besonders günstige Halterung des Dichtungsrings erzielt. Darüber hinaus wird auch die Abdichtungswirkung zwischen Dichtungsring und der Dichthülse günstig gestaltet.

Der gleiche Effekt kann dadurch erzielt werden, dass der dritte Wandabschnitt in Richtung auf das erste Ende der Dichthülse geneigt auf die Längsachse zu verläuft.

In Verbindung mit der ersten Ausgestaltung des dritten Wandabschnitts in Form einer Wölbung ist vorgesehen, dass der Halteabschnitt des Dichtungsrings einen zur Wölbung des dritten Wandabschnitts passenden gewölbten Abschnitt aufweist, der in einen durch die Wölbung des dritten Wandabschnitts im Bereich der Aufnahmenut gebildeten Hinterschnitt eingreift.

In Verbindung mit der zweiten Ausführungsform des Verlaufs des dritten Wandabschnitts ist vorgesehen, dass der Halteabschnitt des Dichtungsrings einen Vorsprung aufweist, der den durch den geneigten Verlauf des dritten Wandabschnitts gebildeten Hinterschnitt der Aufnahmenut ausfüllt.

Bei beiden vorgenannten Varianten wird zur Reduzierung des erforderlichen radialen Bauraums und zur Verbesserung der Halterung des Dichtungsrings vorgeschlagen, dass der Halteabschnitt des Dichtungsrings mit einer Ringnut versehen ist, in die der dritte Wandabschnitt zumindest teilweise eingreift.

Bei allen Ausführungsbeispielen ist vorgesehen, dass der Dichtungsring mindestens zwei Dichtlippen aufweist, die an der Anlagefläche dichtend anliegen.

Bevorzugte Ausführungsbeispiele der Erfindung sind in der Zeichnung schematisch dargestellt.

Es zeigt
- Figur 1: schematisch eine Kreuzgelenkwelle mit einer erfindungsgemäßen Abdichtung gemäß Figur 2,
- Figur 2: das Detail X aus Figur 1 in vergrößertem Maßstab mit einer ersten Ausführungsform der Abdichtanordnung im Halblängsschnitt,
- Figur 3: eine alternative Ausführungsform zu der Abdichtanordnung gemäß Figur 2 im vergrößerten Maßstab im Halblängsschnitt,
- Figur 4: eine dritte Ausführungsform der Abdichtanordnung im Halblängsschnitt und
- Figur 5: eine vierte Ausführungsform der Abdichtanordnung im Halblängsschnitt.

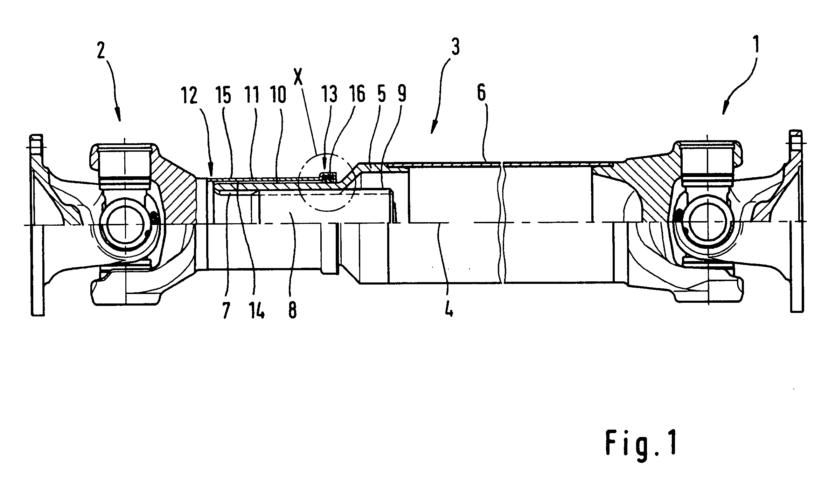

Die Kreuzgelenkwelle gemäß Figur 1 umfasst ein erstes Kreuzgelenk, welches eine erste Gelenkgabel mit einem Flansch zum Anschluss an ein treibendes oder getriebenes Bauteil, eine zweite Gelenkgabel und ein beide gelenkig verbindendes Zapfenkreuz aufweist. Das zweite Kreuzgelenk 2 entspricht im Aufbau dem ersten Kreuzgelenk 1. Ferner umfasst die Kreuzgelenkwelle einen Längenausgleich 3. Der Längenausgleich 3 umfasst ein auf einer Längsachse 4 ausgerichtetes rohrförmiges erstes Wellenelement 5, das über ein Anschlussrohr mit der zweiten Gelenkgabel des ersten Kreuzgelenks 1 fest verbunden ist. Das erste Wellenelement 5 besitzt eine Längsbohrung, in der eine Innenverzahnung vorhanden ist, deren Zähne sich parallel zur Längsachse 4 erstrecken.

An die zweite Gelenkgabel des zweiten Kreuzgelenks 2 ist ein zapfenförmiges zweites Wellenelement 8 einstückig angeschlossen. Dieses zweite Wellenelement 8 besitzt einen Abschnitt mit einer Außenverzahnung 9. Die Außenverzahnung 9 ist zur Innenverzahnung 7 passend ausgebildet und greift mit ihren Zähnen zwischen die der Innenverzahnung 7 so ein, dass zwischen beiden ein Drehmoment bei Drehung um die Längsachse 4 übertragen werden kann und darüber hinaus beide zueinander relativ entlang der Längsachse 4 verstellbar sind.

Zwischen dem mit der Außenverzahnung 9 versehenen Abschnitt des zweiten Wellenelemtens 8 und dem Bereich, der mit der zweiten Gelenkgabel des zweiten Kreuzgelenks 2 verbunden ist, befindet sich ein gegenüber der Außenverzahnung 9 im Durchmesser verringerter Abschnitt.

Das erste Wellenelement 5 besitzt eine kreiszylindrische Außenfläche, die eine Anlagefläche 10 bildet.

Koaxial um das erste Wellenelement 5 und das zweite Wellenelement 8 ist eine Dichthülse 11 angeordnet, die mit ihrem ersten Ende 12 entweder unmittelbar mit dem zweiten Wellenelement 8 oder der zweiten Gelenkgabel des zweiten Kreuzgelenks 2, an das das zweite Wellenelement 8 angeschlossen ist, verbunden ist.

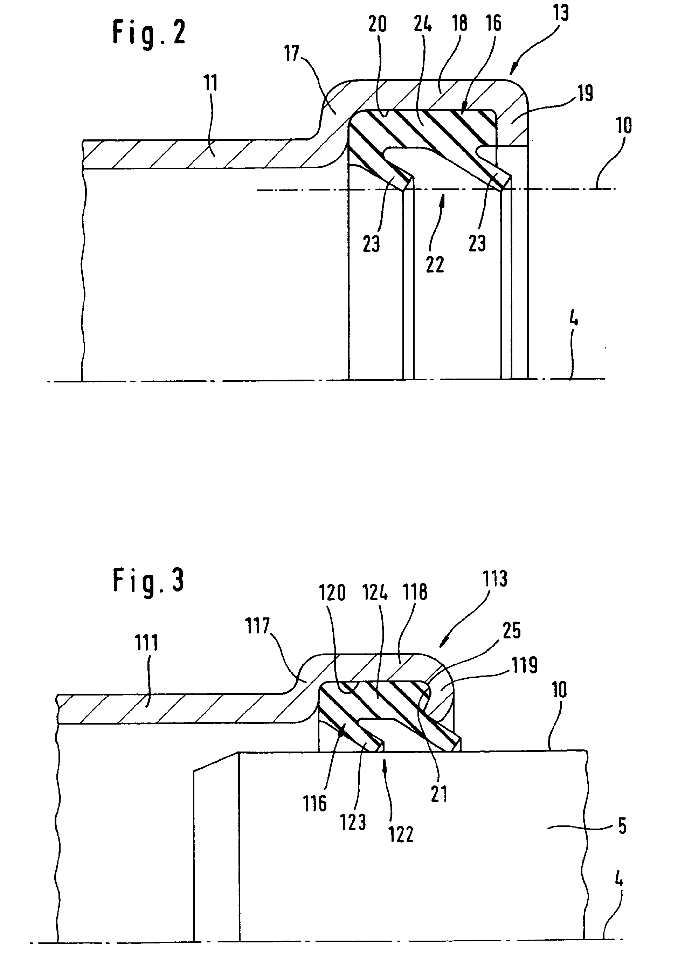

Das zweite Ende 13 der Dichthülse 11 trägt einen Dichtungsring 16. Unter erstes Ende 12 und zweites Ende 13 ist kein definitives, d.h. durch einen bestimmten Endpunkt oder eine bestimmte Endfläche dargestelltes Ende, sondern ein Abschnitt oder ein Bereich gemeint. Die Dichthülse 11 weist eine Hülseninnenfläche auf, die zu der Anlagefläche 10 mit radialem Abstand angeordnet ist. Sie besitzt ferner eine Hülsenaußenfläche 15. Die Dichthülse 11 kann je nach Erfordernis aus einem Metallrohr oder Kunststoffrohr bestehen. Dieses muss jedoch formbeständig sein. Der Aufbau und die Verbindung der Dichthülse 11 mit dem Dichtungsring 16 sowie die Gestaltung des Dichtungsrings 16 sind in Form der Einzelheit X in den Figuren 2 bis 5 dargestellt und anhand derselben für verschiedene Ausführungsformen erläutert.

Figur 2 zeigt das Detail X gemäß Figur 1 bezogen auf eine erste Ausführungsform im vergrößerten Maßstab, und zwar im Halblängsschnitt. Es ist die Dichthülse 11 nur mit einem Teil ihrer Länge dargestellt. Insbesondere ist das zweite Ende 13 ersichtlich. Ausgehend von dem nicht dargestellten ersten Ende ist am zweiten Ende 13 dem ersten Ende nächstliegend ein erster Wandabschnitt 17 vorgesehen, der sich von der Längsachse 4 nach außen erstreckt. An diesen schließt sich in Richtung vom ersten Ende weg ein im wesentlichen zylindrisch gestalteter zweiter Wandabschnitt 18 an. Dieser endet in einem dritten Wandabschnitt 19, der radial auf die Längsachse 4 zu verläuft. Hierdurch wird zur Längsachse 4 hin in der Dichthülse 11 eine ringförmige Aufnahmenut 20 gebildet. Diese dient zur Aufnahme eines Dichtungsrings 16. Der Dichtungsring 16 umfasst einen Dichtabschnitt 22 mit zwei Dichtlippen 23, die vom ersten Ende der Dichthülse 11 weg in Richtung der Anlagefläche 10 zustreben. Zur Festlegung des Dichtungsrings 16 in der Aufnahmenut 20 dient ein Halteabschnitt 24, der sich eng an die Kontur der Aufnahmenut 20 anpasst. Der Dichtungsring 16 besteht aus einem Elastomer-Werkstoff. Der Halteabschnitt weist keinerlei Verstärkungen auf. Er ist so gestaltet, dass er zwar dann, wenn er in der Aufnahmenut 20 einsitzt, ausreichend formstabil ist, zur Montage des Dichtungsrings 16 aber durch den im Bereich des dritten Wandabschnitts 19 frei gelassenen Durchtritt eingeführt werden kann, in dem er partiell eingeschnürt wird, um in die Aufnahmenut 24 eingefädelt zu werden.

Figur 3 zeigt eine alternative Gestaltung des zweiten Endes 113 der Dichthülse 111. An dem zweiten Ende 113 ist, ausgehend vom ersten Ende, zunächst ein von der Längsachse 4 und damit auch der Anlagefläche 10 wegstrebender erster Wandabschnitt 117 vorgesehen, an den sich ein im wesentlichen auf der Längsachse 4 zentrierter zylindrischer zweiter Wandabschnitt 118 anschließt, der in dem dritten Wandabschnitt 119 endet, der auf die Außenfläche 10 und die Längsachse 4 mit einer vom ersten Ende der Dichthülse 111 weg weisenden Wölbung verläuft. Hierdurch weist die durch die drei Wandabschnitte 117, 118, 119 gebildete Aufnahmenut 120 einen Hinterschnitt 21 auf. Der Dichtungsring 116 umfasst ebenfalls einen Dichtabschnitt 122 mit den beiden Dichtlippen 123, die die gleiche Orientierung aufweisen wie die Dichtlippen bei der Ausführungsform gemäß Figur 2. Er besitzt ferner einen Halteabschnitt 124, der die Aufnahmenut 120 mit dem zugehörigen Hinterschnitt 21 ausfüllt mit einem dazu von der dem ersten Ende weg weisenden gewölbten Abschnitt 25. Dadurch, dass der gewölbte Abschnitt 25 in den Hinterschnitt 21 eingreift, wird eine sichere Halterung des Dichtungsrings 116 und insbesondere eine Stabilisierung des Halteabschnitts 124 im eingebauten Zustand erzielt, so dass dieser, um die Montage zu erleichtern, relativ flexibel gestaltet sein kann.

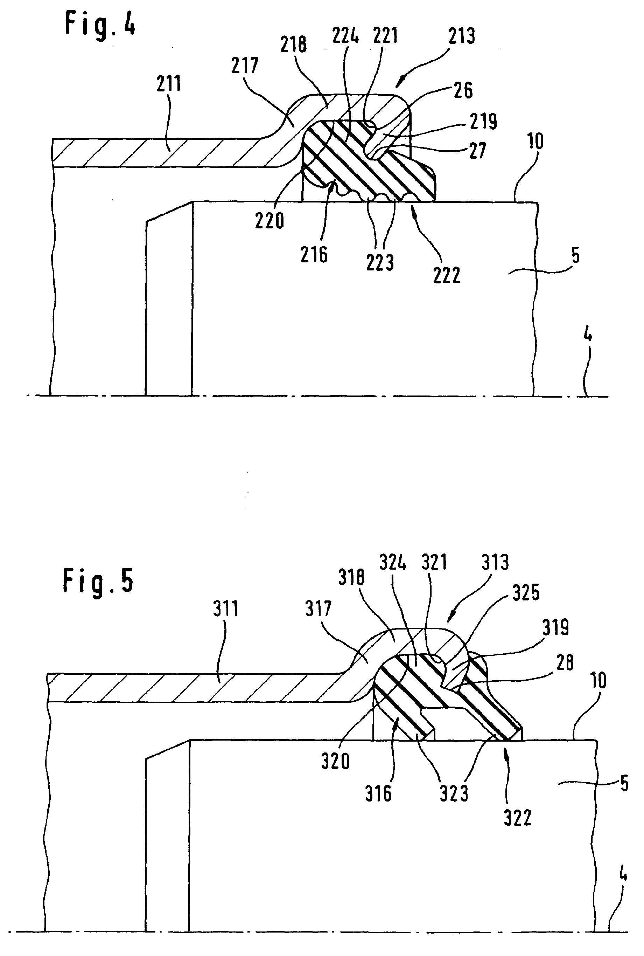

Die Halterung des Dichtungsrings kann durch die beiden nachfolgend noch näher beschriebenen Ausführungsformen gemäß Figuren 4 und 5 noch verbessert werden.

Bei der Ausführungsform gemäß Figur 4 weist die Dichthülse 211 an ihrem zweiten Ende 213 ebenfalls zunächst, dem ersten Ende nächstliegend, einen von der Außenfläche 10 des ersten Wellenelementes weg weisenden ersten Wandabschnitt 217 auf, an den sich ein vom ersten Ende der Dichthülse 211 weg entlang der Längsachse 4 erstreckender, im wesentlichen zylindrischer, zweiter Wandabschnitt 218 anschließt. Dieser endet am dritten Wandabschnitt 219, der schräg in Richtung auf die Außenfläche 10 und damit die Längsachse 4 und in Richtung auf das erste Ende der Dichthülse 211 zu geneigt verläuft. Die durch die drei Wandabschnitte 217, 218 und 219 gebildete Aufnahmenut 220 weist durch den schrägen Verlauf des dritten Wandabschnitts 219 ebenfalls einen Hinterschnitt 221 auf.

Bei der Ausführungsform gemäß Figur 4 weist der Dichtungsring 216 einen Dichtabschnitt 222 mit wulstartigen Dichtlippen 223 auf, die an der Anlagefläche 10 dichtend anliegen. Ein Teil dieses Dichtabschnitts 222 steht axial über das zweite Ende 213 vor. Ferner besitzt der Dichtungsring 216 den Halteabschnitt 224, der einen Vorsprung 26 aufweist, der den Hinterschnitt 221 ausfüllt. Zur Verbesserung der Halterung und darüber hinaus aber auch zur Reduzierung des Außendurchmessers der Dichthülse 211 im Bereich des zweiten Endes 213 ist in der Außenkontur des Dichtungsrings 216 eine Ringnut 27 vorgesehen, in welche der dritte Wandabschnitt 219 eingreift.

Eine ähnliche Ausbildung wie die gemäß Figur 4 ist bei der Ausführungsform gemäß Figur 5 vorgesehen.

Die Dichthülse 311 weist, ausgehend vom ersten Ende gesehen, zunächst einen nach außen von der Anlagefläche 10 des ersten Wellenelements 5 weg strebenden ersten Wandabschnitt 317 auf, der in einen annähernd parallel zur Anlagefläche 10 verlaufenden zweiten Wandabschnitt 318 übergeht und an den sich ein wieder auf die Anlagefläche 10 und damit die Längsachse 4 zustrebend mit einer Wölbung verlaufender dritter Wandabschnitt 319 anschließt. Die Wölbung ist nach außen von dem ersten Ende der Dichthülse 311 weg gerichtet. Hierdurch entsteht in der durch die drei Wandabschnitte 317, 318 und 319 gebildeten Aufnahmenut 320 ein Hinterschnitt 321. Der Dichtungsring 316 weist einen Dichtabschnitt 322 mit zwei Dichtlippen 323 zur Anlage an der Anlagefläche 10 des ersten Wellenelements 5 auf. Er umfasst ferner den Halteabschnitt 324, der der Form der Aufnahmenut 320 angepasst ist und mit dem der Dichtungsring 316 durch die den Hinterschnitt 321 ausfüllenden gewölbten Abschnitt 325 sicher gehalten wird. Zusätzlich ist in dem Halteabschnitt 324 des Dichtungsrings 316 eine Ringnut 28 eingebracht, die relativ tief gestaltet ist und in die annähernd der gesamte dritte Wandabschnitt 319 eingreift. Dabei legt sich an diesen dritten Wandabschnitt 319 von außen ein Ringvorsprung des Dichtungsrings 316 eng an.

### Bezugszeichenliste

- 1: erstes Kreuzgelenk
- 2: zweites Kreuzgelenk
- 3: Längenausgleich
- 4: Längsachse
- 5: erstes Wellenelement
- 6: Anschlussrohr
- 7: Innenverzahnung
- 8: zweites Wellenelement
- 9: Außenverzahnung
- 10: Anlagefläche
- 11, 111, 211, 311: Dichthülse
- 12: erstes Ende
- 13, 113, 213, 313: zweites Ende
- 14: Hülseninnenfläche
- 15: Hülsenaußenfläche
- 16, 116, 216, 316: Dichtungsring
- 17, 117, 217, 317: erster Wandabschnitt
- 18, 118, 218, 318: zweiter Wandabschnitt
- 19, 119, 219, 319: dritter Wandabschnitt
- 20, 120, 220, 320: Aufnahmenut
- 21, 221, 321,: Hinterschnitt
- 22, 122, 222, 322: Dichtabschnitt
- 23, 123, 223, 323: Dichtlippe
- 24, 124, 224, 324: Halteabschnitt
- 25, 325: gewölbter Abschnitt
- 26: Vorsprung
- 27: Ringnut
- 28: Ringnut

## Patentansprüche

1. Abdichtanordnung für den Längenausgleich (3) einer Kreuzgelenkwelle, welche ein rohrförmiges erstes Wellenelement (5) mit einer Innenverzahnung (7) und ein zweites Wellenelement (8) mit einer zur Innenverzahnung (7) passenden und darin entlang einer Längsachse (4) verstellbaren Außenverzahnung (9) aufweist, wobei eines der beiden Wellenelemente (5, 8) eine kreiszylindrische Außenfläche aufweist, die eine Anlagefläche (10) für einen Dichtungsring (16, 116, 216, 316) bildet, umfassend
- eine rohrförmige Dichthülse (11, 111, 211, 311),
- die ein erstes Ende (12) und dem ersten Ende (12) entfernt ein zweites Ende (13, 113, 213, 313) aufweist,
- in die das die Anlagefläche (10) aufweisende Wellenelement (5) eintaucht,
- deren erstes Ende (12) mit dem Wellenelement (8), das keine Anlagefläche (10) für den Dichtungsring (16,116,216,316) aufweist, oder mit einem damit verbundenen Bauteil fest verbunden ist,
- die an ihrem zweiten Ende (13, 113, 213, 313) eine ringförmige Aufnahmenut (20, 120, 220, 320) zur Festlegung des Dichtungsrings (16, 116, 216, 316) aufweist,
**dadurch gekennzeichnet,**
**dass** die Aufnahmenut (20, 120, 220, 320) dadurch gebildet ist, dass dem ers-' ten Ende (12) zugewandt ein von der Längsachse (4) weg gerichteter erster Wandabschnitt (17, 117, 217, 317), daran anschließend ein vom ersten Ende (12) weg verlaufender zweiter Wandabschnitt (18, 118, 218, 318) und daran anschließend ein auf die Längsachse (4) zu verlaufender dritter Wandabschnitt (19, 119, 219, 319) vorgesehen sind, und
**dass** der Dichtungsring (16, 116, 216,) einen Dichtabschnitt (22, 122, 222, 322) mit mindestens einer Dichtlippe (23, 123, 223, 323) zur Anlage an der Anlagefläche (10) trägt und einen Halteabschnitt (24, 124, 224, 324) aufweist, welcher zumindest teilweise in der Aufnahmenut (20, 120, 220, 320) aufgenommen und flexibel gestaltet ist, so dass er in die Aufnahmenut (20, 120, 220, 320) unter Nutzung seiner Verformbarkeit einführbar ist.

2. Abdichtanordnung nach Anspruch 1,
**dadurch gekennzeichnet,**
**dass** der dritte Wandabschnitt (119, 319) gewölbt verläuft, wobei die Wölbung vom ersten Ende der Dichthülse (111, 311) weg gerichtet ist.

3. Abdichtanordnung nach Anspruch 1,
**dadurch gekennzeichnet,**
**dass** der dritte Wandabschnitt (219) in Richtung auf das erste Ende (12) der Dichthülse (211) geneigt auf die Längsachse (4) zu verläuft.

4. Abdichtanordnung nach Anspruch 2,
**dadurch gekennzeichnet,**
**dass** der Halteabschnitt (124, 324) des Dichtungsrings (116, 316) einen zur Wölbung des dritten Wandabschnitts (119, 319) passenden gewölbten Abschnitt (25, 325) aufweist, der in den durch die Wölbung des dritten Wandabschnitts (119, 319) im Bereich der Aufnahmenut (120, 320) gebildeten Hinterschnitt (21, 321) eingreift.

5. Abdichtanordnung nach Anspruch 3,
**dadurch gekennzeichnet,**
**dass** der Halteabschnitt (224) des Dichtungsrings (216) einen Vorsprung (26) aufweist, der den durch den geneigten Verlauf des dritten Wandabschnitts (219) gebildeten Hinterschnitt (221) der Aufnahmenut (220) ausfüllt.

6. Abdichtanordnung nach einem der Ansprüche 1 bis 5,
**dadurch gekennzeichnet,**
**dass** der Halteabschnitt (224, 324) des Dichtungsrings (216,316) mit einer Ringnut (27, 28) versehen ist, in die der dritte Wandabschnitt (219, 319) zumindest teilweise eingreift.

7. Abdichtanordnung nach Anspruch 1,
**dadurch gekennzeichnet,**
**dass** der Dichtungsring (16, 116, 216, 316) mindestens zwei Dichtlippen (23, 123, 223, 323) aufweist, die an der Anlagefläche (10) dichtend anliegen.
